# EUROPÄISCHE PATENTSCHRIFT

(11) **EP 1 178 228 B1**
(45) Veröffentlichungstag und Bekanntmachung des Hinweises auf die Patenterteilung: **30.03.2011**
(21) Anmeldenummer: 01250029.4
(22) Anmeldetag: 28.01.2001
(51) Int. Cl.: F16C 11/06, E06B 3/54, E04B 2/88, E04F 13/08

(54) **Lagerungselement zur spannungsfreien Befestigung von Platten an Tragkonstruktionen**
Element for tension-free mounting of panels on supporting structures
Elément pour le montage sans tensions de panneaux sur des structures portantes

(30) Priorität: 01.02.2000 DE 10004253
(43) Veröffentlichungstag der Anmeldung: 06.02.2002
(73) Patentinhaber: Dr. Ing. Gerhard Espich, 12621 Berlin (DE)
(72) Erfinder: Dr. Ing. Gerhard Espich, 12621 Berlin (DE)
(74) Vertreter: Burghardt, Dieter

(56) Entgegenhaltungen:
- WO-A-99/45217
- DE-A- 2 906 617

## Beschreibung

Die vorliegende Erfindung betrifft eine spannungsfreie Lagerung für Platten aus vorwiegend spröden oder anderen empfindlichen Materialien, wie z.B. Glas oder Keramik, unter besonderer Berücksichtigung der z. B. durch Temperaturänderung oder/ und Belastung auftretenden Verformungen und Abmessungsänderungen dieser Platten.

Die übliche Befestigung von Platten erfolgt über mindestens drei, im allgemeinen über vier punktförmige Lagerungen an der Tragkonstruktion zum Beispiel von Bauwerken. Bilden solche Platten die äußere Schale, dann sind diese Platten z.B. der Witterung und Windbelastung ausgesetzt. Sofern die verwendeten Platten aus spröden Materialien bestehen, ist, wie z.B. bei Glas- und Keramikplatten, eine direkte starre Verbindung mit der Tragkonstruktion an allen Punkten ausgeschlossen. Solche Platten können bekanntlich keine großen Biegezugspannungen aufnehmen. Letzteres bedeutet, dass z.B. infolge von Temperaturschwankungen auftretende Längenänderungen nicht von den Platten direkt in die Tragkonstruktion eingeleitet werden dürfen, sondern von speziellen Lagern aufgenommen werden müssen. Diese speziellen Lager stellen dann das Verbindungselement zwischen der Platte und der Tragkonstruktion her.

Aus der EP 0 201 212 B1 ist ein Halter für Glasplatten bekannt, welcher ein in einem Hülsenelement sphärisch drehbares Kugelelement aufweist, wobei das Hülsenelement in einer Bohrung der Platte befestigt ist. Der Drehpunkt der sphärischen Bewegungen liegt dabei im wesentlichen in der Mittelebene der Platte. Das Kugelelement ist mit einer Unterkonstruktion verbunden. Dieser Halter lässt keinen unmittelbaren Toleranzausgleich zu. Ein Toleranzausgleich zwischen der Unterkonstruktion und der Platte muß durch eine spezielle Ausgestaltung der Unterkonstruktion erfolgen. Dies ist aufwendig und stellt für die Anwendung eine Einschränkung dar. Durch die zur Aufnahme der sphärischen Lagerung erforderliche Bohrung im Glas mit einem großen Durchmesser ist die Lastaufnahme sehr eingeschränkt. Außerdem ist die Konstruktion im Bereich der Glasbohrung nicht wasserdicht, so daß dieser bekannte Halter nur im Innenbereich eingesetzt werden kann.

Aus der DE 39 27 653 C2 ist eine Halterung für Glasplatten bekannt, die eine biegemomentfreie Lagerung mit Toleranzausgleich schafft. Hierbei wird eine Glasscheibe zwischen zwei Auflagetellern mittels einer die Glasscheibe durchdringenden und die Auflageteller miteinander verspannenden Halteschraube eingespannt. Einer der Auflageteller ist über ein Kugelgelenk mit einer Halterung verbunden, welche an der Unterkonstruktion befestigt ist. Ein Toleranzausgleich zwischen der Unterkonstruktion und der Glasscheibe erfolgt hier im Bereich der Glasbohrung, durch welche die Halteschraube hindurchtritt. Kompensationsbewegungen zum Toleranzausgleich finden dabei als Relativbewegungen der Glasscheibe zum Halter statt, so dass keine Bildung einer bündigen Glasfläche über ein größeres Glasplattenfeld möglich ist.

Nach der DE 44 00 979 A1 ist eine Lösung bekannt geworden, bei der die translatorische Verschiebbarkeit zwischen der Bauplatte aus Glas und der Tragkonstruktion durch ein Aufnahme- und Halterungselement ausgeglichen werden soll. Hierdurch soll eine spannungsfreie Aufnahme der Bauplatte aus Glas möglich sein. Diese Halterung zur Lagerung einer Bauwerksplatte aus Glas besteht aus einer als Ankerplatte bezeichneten Aufnahme für die Bauwerksplatte aus Glas, die mit einem kugelkopfartigen Bauteil verbunden ist, das wiederum in einer Kugelkopfpfanne gehaltert und gelagert ist. Das mit der Ankerplatte in Verbindung stehende kugelkopfartige Teil ist in der Lage, Drehbewegungen und Kippbewegungen aufzunehmen.

Nach dieser Lösung soll die Verhinderung der Kraftübertragung zwischen der Bauwerksplatte aus Glas und der Unterkonstruktion durch die Kompensationsbewegung innerhalb der vorgeschlagenen Halterung möglich sein.

Diesen Lösungen haftet der Mangel an, daß die Halterungen zur Lagerung einer Platte sehr bau- und damit kostenaufwendig ist und außerdem nicht alle Zwängungen, die auf eine Halterung zwischen der Platte und einer Tragkonstruktion wirken, ausgleichen können. Die Verdrehungen und Verschiebungen können mit diesen konstruktiven Lösungen nicht wahlweise realisiert werden. Ursache dieser Nachteile ist die Verwendung von Lagerungen unter Nutzung von Kugelausschnitten.

Gegenstand der WO-A-9945217 bzw. DE 198 09 617 sind Kreuzverbindungen als Befestigungseinrichtungen mit zwei einachsig schwenkbaren Scharniergelenken, die rechtwinklig zueinander verlaufen und dabei entweder schneiden oder räumlich voneinander beabstandet sind. Mit diesen sind Verdrehungen und auch axiale Verschiebungen möglich.

Jeweils an der Platte und der Tragkonstruktion sind im rechten Winkel zueinander stehende Scharniergelenke vorgesehen. Die Scharniere bestehen aus Aufnahmeteilen und Kupplungsstücken. Das Kupplungsstück hat in einer Ausführungsvariante die Gestalt eines doppelten T, dessen beide Querarme um 90° gegeneinander verdreht sind.

Der Abstand der Querarme ist wählbar. Das Kupplungsstück hat die Form eines Kreuzes für dem Fall, dass kein Abstand vorhanden ist.

In einer weiteren Ausführungsvariante werden Aufnahmeteile mit Zapfen beschrieben, welche von (doppelt) gabelförmigen Kupplungsstücken umfasst werden. Außerdem wird eine Variante beschrieben, bei der die Achsen an den (doppelt) gabelförmigen Kupplungsstücken befestigt sind.

Bei dieser Lösung ist immer ein doppel-T-, kreuz- oder -gabelförmiges Kupplungsstück erforderlich, um die beiden Scharniergelenke miteinander zu verbinden.

Die angegebenen Kupplungsstücke sind sehr aufwendig in der Herstellung.

Die vorliegende Erfindung bezweckt eine Lösung vorzuschlagen, die einen geringen Bauaufwand aufweist, einfach zu warten ist und wahlweise eine zwängungs- und momentenfreie Befestigung von Platten an Tragkonstruktionen möglich macht.

Der Erfindung liegt die Aufgabe zugrunde, ein Befestigungselement zur zwängungsfreien Befestigung von Platten an Tragkonstruktionen zu entwickeln, das einen wahlweisen Ausgleich von in bis zu zwei linearen und bis zu drei drehenden Freiheitsgraden gerichteten relativen Bewegungen zwischen Platte und Tragkonstruktion ermöglicht.

Diese Aufgabe wird mit den in den unabhängigen Ansprüchen 1 und 2 offenbarten technischen Lösungen realisiert. Die Angaben in den abhängigen Ansprüchen dienen der weiteren Ausgestaltung der Lehre nach Anspruch 1 und 2.

Die Erfindung soll nachfolgend an einem Ausführungsbeispiel näher erläutert werden. In der zugehörigen Zeichnung zeigen:

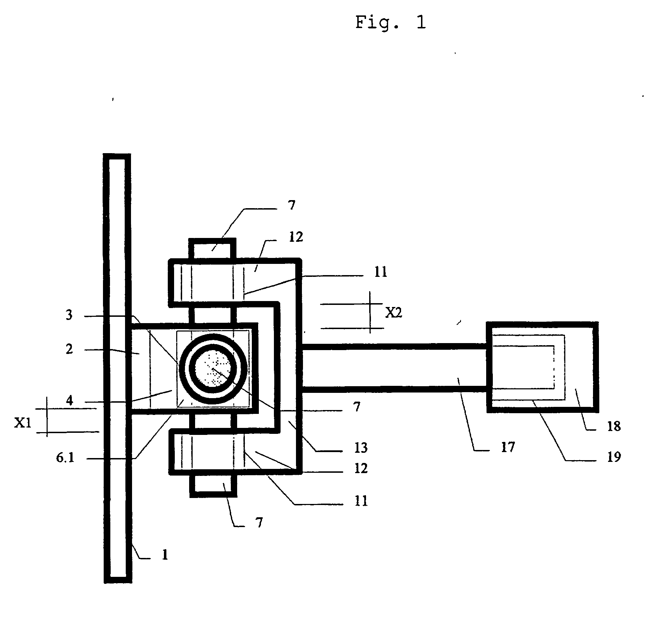

- Fig. 1: eine Befestigung einer Platte an einer Tragkon- struktion unter Verwendung einer Kreuzgelenkverbin- dung mit einem Zapfen-Kreuzgelenkstück,

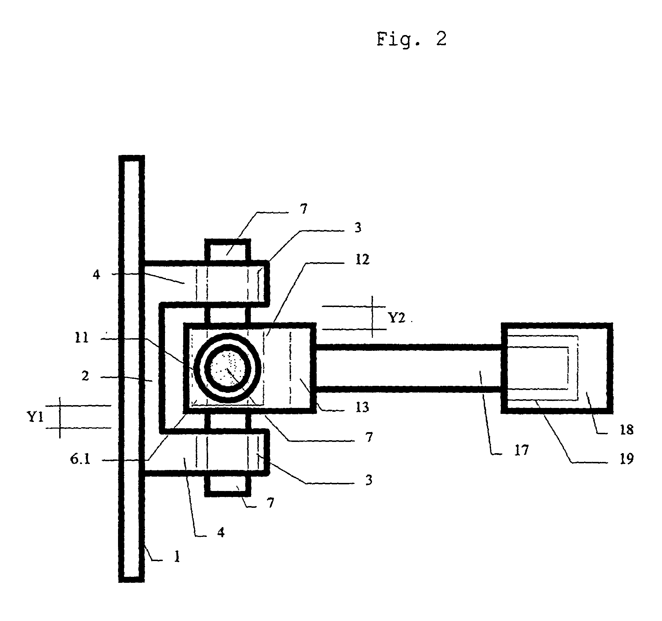

- Fig. 2: eine Darstellung nach Fig. 1 mit einer um 90 ° ge- drehten Ansicht,

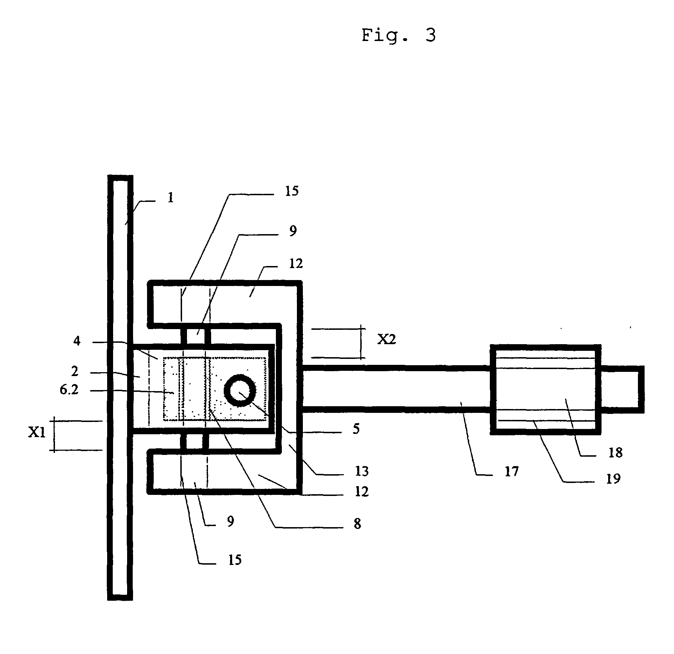

- Fig. 3: eine abgewandelte Form der im Fig. 1 gezeigten Aus- führung unter Verwendung einer Kreuzgelenkverbindung mit einem Achsen-Kreuzgelenkstück,

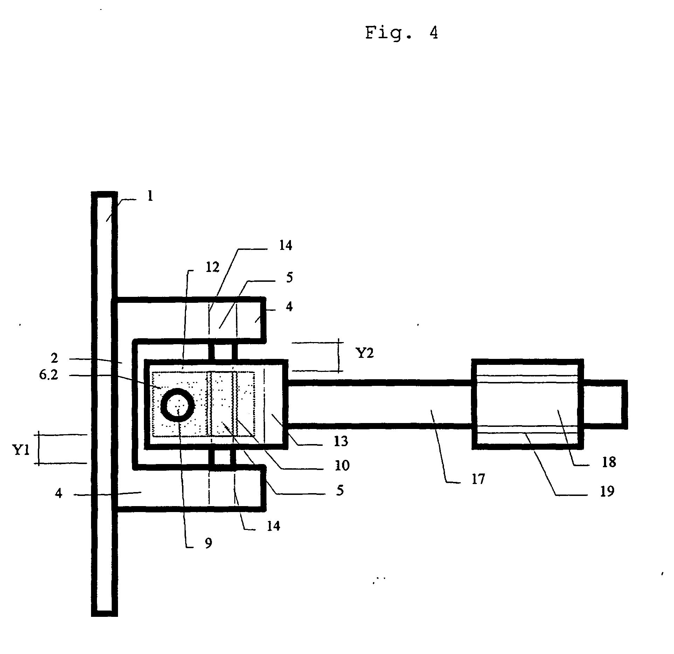

- Fig. 4: eine Darstellung nach Fig. 3 mit einer um 90 ° ge- drehten Ansicht,

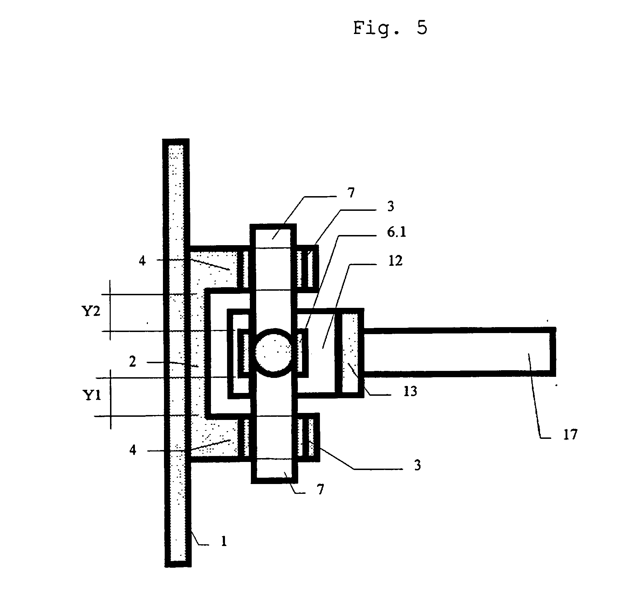

- Fig. 5: eine Darstellung nach Fig. 1 im Schnitt,

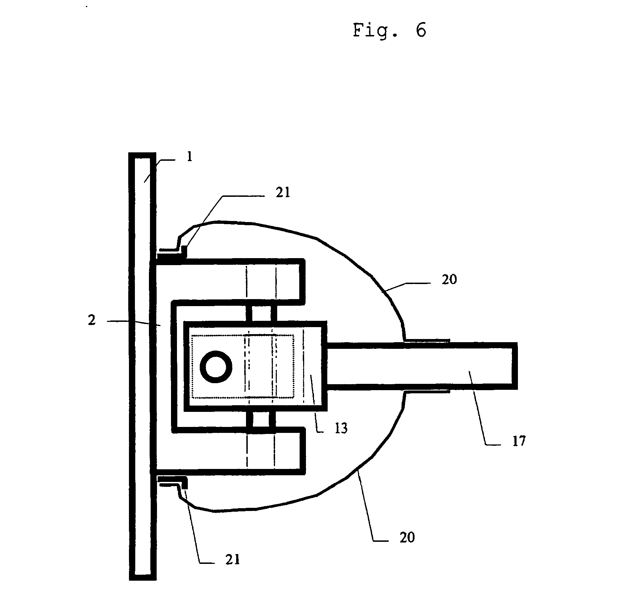

- Fig. 6: ein Befestigungselement mit Staubkappe,

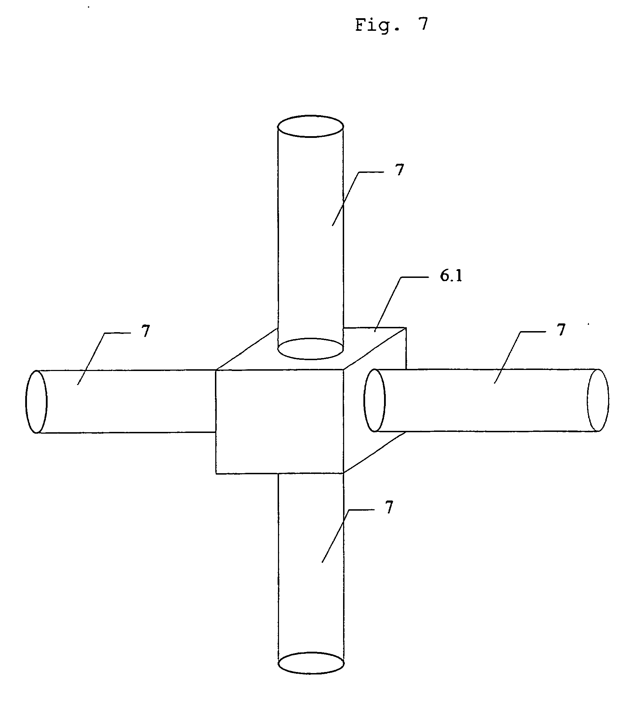

- Fig. 7: ein Kreuzgelenkstück in der Ausführung als Zapfen- Kreuzgelenkstück mit sich in einer Ebene kreuzenden geometrischen Achsen,

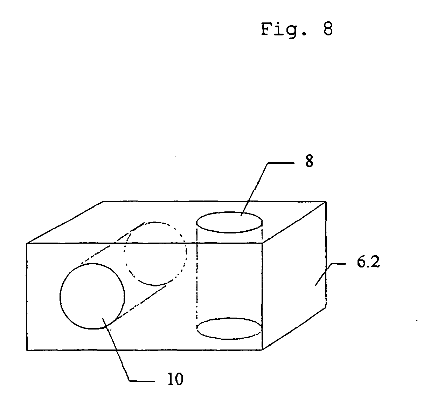

- Fig. 8: ein Kreuzgelenkstück in der Ausführung als Achsen- Kreuzgelenkstück mit sich nicht in einer Ebene bzw. mit sich in zwei parallelen Ebenen kreuzenden geome- trischen Achsen,

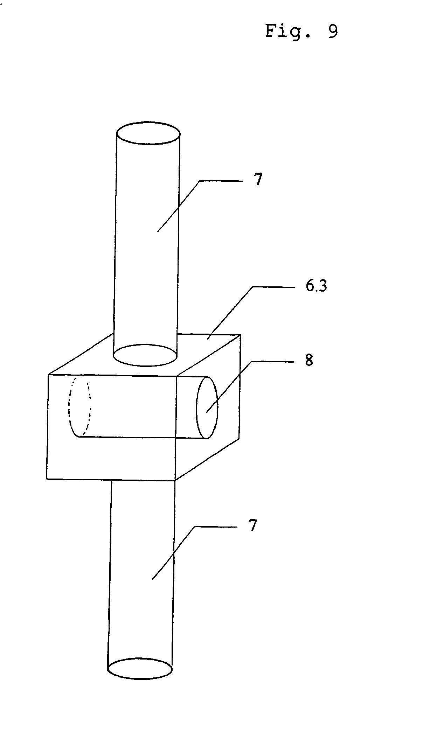

- Fig. 9: ein Kreuzgelenkstück in der Ausführung als Zapfen- Achsen-Kreuzgelenkstück mit sich in einer Ebene kreuzenden geometrischen Achsen,
- Fig. 10: eine Befestigung einer Platte an einer Tragkonstruk-- tion unter Verwendung einer Öse-Langloch-Verbindung,
- Fig. 11: Darstellung nach Fig. 10 mit einer um 90 ° gedrehten Ansicht,
- Fig. 12: eine Befestigung einer Platte an einer Tragkonstruk- tion unter Verwendung einer Öse-Langloch-Kreuzver- bindung mit beweglichen Wangen,
- Fig. 13: Darstellung nach Fig. 10 mit einer um 90 ° gedrehten Ansicht,

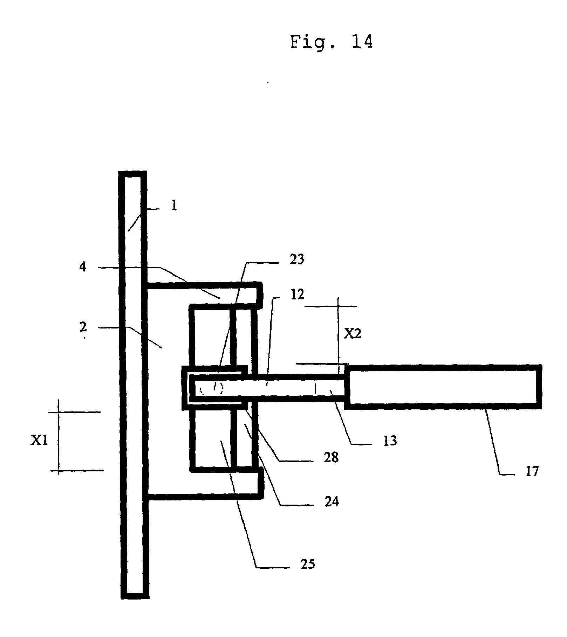

- Fig. 14: eine Befestigung einer Platte an einer Tragkon- struktion unter Verwendung einer Öse-Langloch-Kreuz- verbindung mit festen Wangen, Schlitten und Hülse,

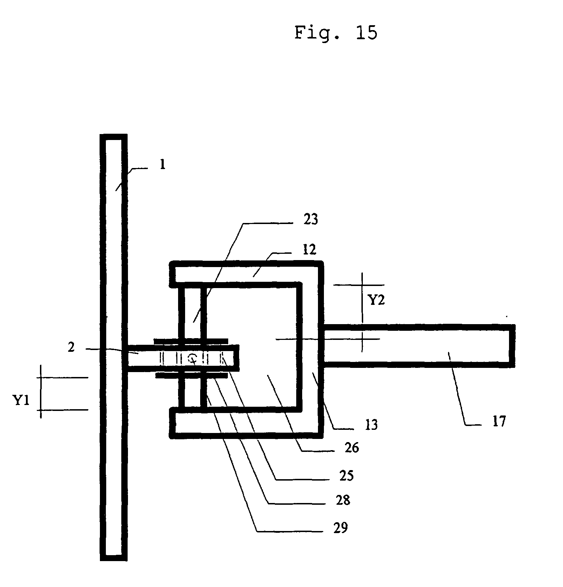

- Fig. 15: Darstellung nach Fig. 10 mit einer um 90 ° gedrehten Ansicht,

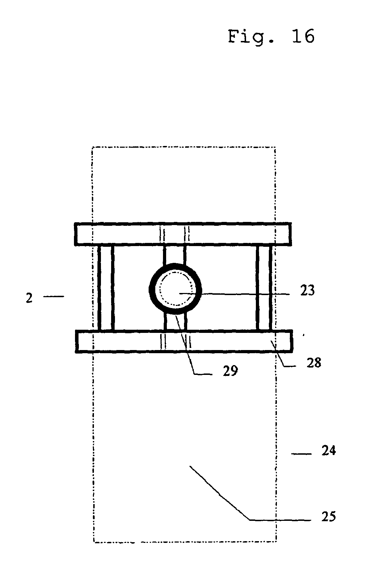

- Fig. 16: ein Schlitten mit drehbar gelagerter Hülse der Aus- führungsvariante Öse-Langloch-Kreuzverbindung mit festen Wangen, Schlitten und Hülse,

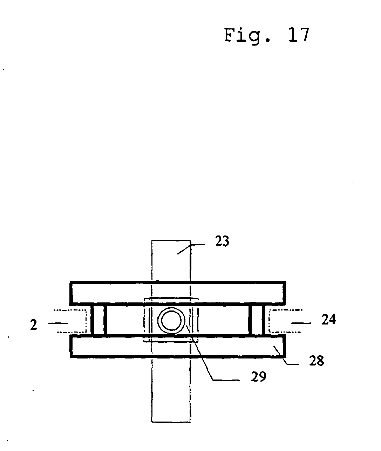

- Fig. 17: Darstellung nach Fig. 16 mit einer um 90 ° gedrehten Ansicht,

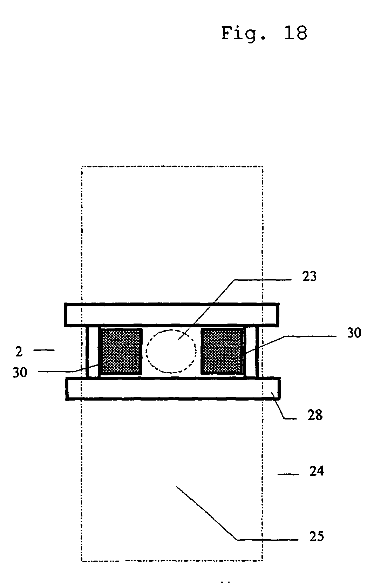

- Fig. 18: ein Schlitten mit Federelementen der Ausführungs- variante Öse-Langloch-Kreuzverbindung mit festen Wangen, Schlitten und Federelementen

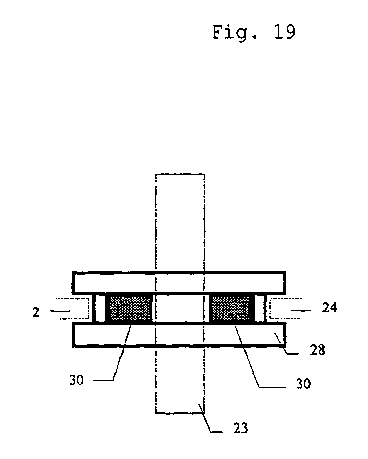

- Fig. 19: Darstellung nach Fig. 18 mit einer um 90 ° gedrehten Ansicht,

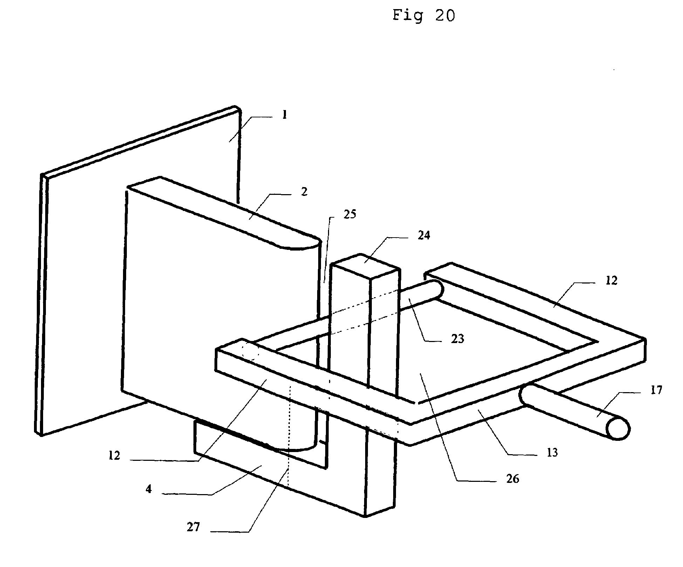

- Fig. 20: Öse-Langloch-Kreuzverbindung mit drehbaren Wangen mit Steg in der Ausführung armförmiges Aufnahmeelement in perspektivischer Darstellung.

Bei einer Kreuzverbindung ist eine Platte 1 wahlweise formschlüssig und/oder kraftschlüssig mit einem arm- oder gabelförmigen Aufnahmeelement 2 verbunden. Gleichzeitig ist ein weiteres, ebenfalls arm- oder gabelförmiges Lagerungselement 13 wahlweise mit dem Befestigungsbolzen 17 verbunden. Zwischen dem Aufnahmeelement 2 und dem Lagerungselement 13 wird eine spezielle Kreuzverbindung hergestellt.

Die Kreuzverbindung kann in verschiedenen Ausführungsarten erfolgen. Diese verschiedenen Ausführungsarten werden im folgenden als Kreuzgelenkverbindung und als Öse-Langloch-Kreuzverbindung unterschieden.

Bei einer Kreuzgelenkverbindung sind das Aufnahmeelement 2 und das Lagerungselement 13 dieser kardanähnlichen Verbindung mit einer Bohrung je Gabelwangen 4, 12, bei gabelförmigen Elementen mit jeweils zwei fluchtenden Bohrungen in den beiden Gabelwangen 4, 12, versehen. In diesen Bohrungen lagern die Zapfen 7 oder Achsen 5, 9, die im Zentrum mit dem Kreuzgelenkstück 6 fest oder drehbar und wahlweise verschieblich verbunden sind. Dadurch befindet sich das Kreuzgelenkstück 6 zwischen allen Gabelwangen 4.

In der Ausführungsvariante Zapfen-Kreuzgelenkstück 6.1 sind das Aufnahmeelement 2 und das Lagerungselement 13 der kardanähnlichen Verbindung mit jeweils zwei fluchtenden Gleitbohrungen 3, 11 in den beiden Gabelwangen 4, 12 versehen. Die insgesamt 4 Stück Gleitbohrungen 3, 11 sind so bemessen, daß eine drehende Bewegung der Zapfen 7 um die geometrische Achse der Zapfen und wahlweise eine lineare Bewegung in beiden Richtungen der geometrischen Achse der Zapfen einwandfrei möglich ist. In den Gleitbohrungen 3, 11 lagern die Zapfen 7, die im Zentrum mit dem Zapfen-Kreuzgelenkstück 6.1 fest verbunden sind.

Bei dieser Variante des Zapfenkreuzgelenkstückes 6.1 befinden sich jeweils zwei gegenüberliegende Zapfen 7 auf einer geometrischen Achse, wobei die beiden geometrischen Achsen senkrecht zueinander stehen. Die wahlweise linearen Bewegungen in jeweils einer oder beiden Richtungen der geometrischen Achsen der Zapfen 7 werden durch die Einführung von Axialspielen X1, X2 bzw. Y1, Y2 in diesen Richtungen zwischen Zapfenkreuzgelenkstück 6.1 und den Gabelwangen 4, 12 ermöglicht.

Die Ausführung ist auch mit jeweils einarmigem Aufnahmeelement 2 und / oder Lagerungselement 13 möglich. Hierbei haben die Elemente nur jeweils eine Wange 4, 12. Das Herausgleiten der Zapfen 7 aus den Bohrungen 3, 11 wird durch bekannte Mittel verhindert oder ist z.B. für die Montage gewollt.

Die Werte der Axialspiele X1, X2 bzw. Y1, Y2 werden durch den Anwender definiert, sie können vom Wert Null an beliebig gewählt werden. Zur Gewährleistung der verschieblichen Lagerung der Zapfen 7 mit dem Zapfen-Kreuzgelenkstück 6.1 in den Bohrungen der Gabelwangen 4, 12 sind die Zapfen 7 um den Betrag der Verschiebung X1 bzw. X2 und Y1 bzw. Y2 über die Außenkante der Gabelwangen 4, 12 hinaus verlängert.

Das Kreuzgelenkstück 6 ist wahlweise auch als ein Achsen-Kreuzgelenkstück 6.2 ausbildbar. Die Ausführung unterscheidet sich in der Ausbildung des Kreuzgelenkstückes 6 und des Überganges vom Kreuzgelenkstück 6 zu den Gabelwangen 4 und 12 von der oben beschriebenen Variante. Bei dieser Ausführungsvariante sind die Achse 5 in Bohrungen 14 in den Gabelwangen 4 des Aufnahmeelementes 2 und die Achse 9 in Bohrungen 15 der Gabelwange 12 des Lagerungselementes 13 fest eingesetzt. Das Achsen-Kreuzgelenkstück 6.2 enthält zwei Gleitbohrungen 8, 10, deren geometrische Achsen sich im rechten Winkel kreuzen und die einen definierten Abstand voneinander haben. Der Abstand der geometrischen Achsen der Gleitbohrungen 8, 10 muss mindestens dem Durchmesser der größten Gleitbohrung 8 oder 10 entsprechen. Die beiden Gleitbohrungen 8, 10 sind so bemessen, daß eine drehende Bewegung der Achsen 5, 9 um die geometrische Achse der Achsen und wahlweise eine lineare Bewegung in beiden Richtungen der geometrischen Achse der Achsen einwandfrei möglich ist. In diesen Gleitbohrungen 8, 10 lagern die Achsen 5, 9.

Die wahlweise linearen Bewegungen in jeweils einer oder beiden Richtungen der geometrischen Achsen der Achsen 5, 9 werden durch die Einführung von Axialspielen X1, X2 bzw. Y1, Y2 in diesen Richtungen zwischen Zapfenkreuzgelenkstück 6.2 und den Gabelwangen 4, 12 ermöglicht. Der innere Wangenabstand der Wangen 4, 12 ist entsprechend groß.

Zur Gewährleistung der verschieblichen Lagerung des Achsen-Kreuzgelenkstückes 6.2 mit den Gleitbohrungen 8, 10 haben die Achsen 5, 9 die Länge, die den äußeren Abmessungen der Gabelwangen 4, 12 entspricht.

Die Ausführung ist auch mit jeweils einarmigem Aufnahmeelement 2 und / oder Lagerungselement 13 möglich. Hierbei haben die Elemente nur jeweils eine Wange 4, 12. Das Abgleiten des Achsen-Kreuzgelenkstückes von den Achsen 5, 9 wird durch bekannte Mittel verhindert oder ist z.B. für die Montage gewollt.

Die Werte der Axialspiele X1, X2 bzw. Y1, Y2 werden durch den Anwender definiert, sie können vom Wert Null an beliebig gewählt werden.

Im Fall der Variante des Zapfen-Achsen-Kreuzgelenkstückes 6.3 ist der Übergang von den Gabelwangen 4, 12 zum Kreuzgelenkstück 6 je geometrischer Achse wahlweise entsprechend der Variante Zapfen-Kreuzgelenkstück 6.1 oder entsprechend der Variante Achsen-Kreuzgelenkstück 6.2 ausgebildet.

Die Ausführung ist auch mit jeweils einarmigem Aufnahmeelement 2 und / oder Lagerungselement 13 möglich. Hierbei haben die Elemente nur jeweils eine Wange 4, 12. Das Lösen der Verbindung wird wie jeweils oben beschrieben durch bekannte Mittel verhindert oder ist z.B. für die Montage gewollt.

Wahlweise kann auch die Verdrehung um eine der beiden geometrischen Achsen der Zapfen 7 oder Achsen 5 oder 9 der Kreuzgelenkverbindung unterbunden werden.

Bei einer erfindungsgemäß vorgesehenen Öse-Langloch-Kreuzverbindung stehen das jeweils arm- oder gabelförmige Aufnahmeelement 2 und das Lagerungselement 13 in kreuzförmiger Lage zueinander und haben zwischen den Gabelwangen 4, 12 Stege 23, 24. Der Steg 23 ist rohrartig ausgebildet und durchdringt den Zwischenraum 25 zwischen Steg 24 und Aufnahmeelement 2. Der Steg 24 durchdringt den Zwischenraum 26 zwischen Steg 23 und Lagerungselement 13.

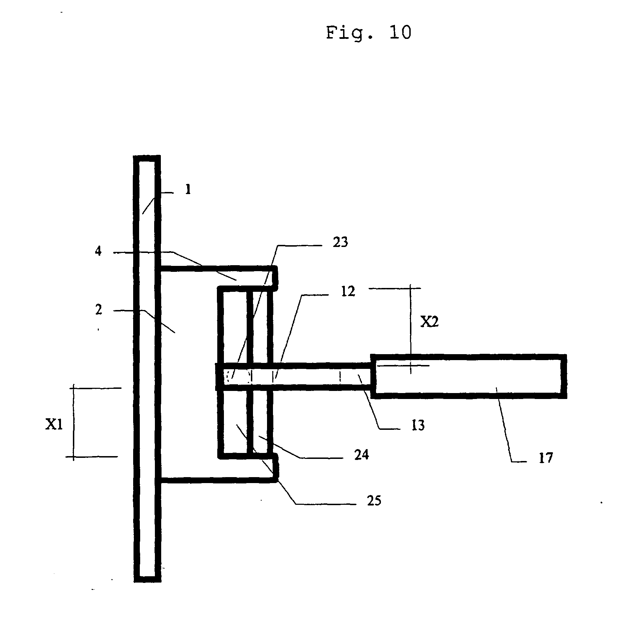

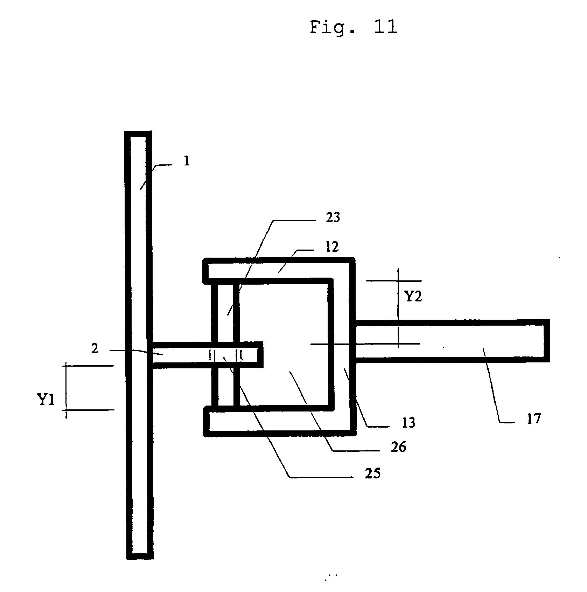

Bei der Ausführungsvariante Öse-Langloch-Kreuzverbindung mit festen Wangen nach Fig. 10 und 11 ist nur einer der beiden Zwischenräume 25 oder 26, in der Fig. 10 und 11 beispielsweise der Zwischenraum 25, so groß bzw. so klein, daß eine formschlüssige Verbindung zwischen Platte und Tragkonstruktion entsteht. Dieser Zwischenraum 25 ist nur wenig größer als der Durchmesser des durchdringenden Steges 23. Der andere Zwischenraum 26 ist wesentlich breiter als der durchdringende Steg 24. Durch die feste Lage der Wangen 4 sind nur kleine drehende Bewegungen um die geometrische Achse des Steges 24, aber drehende Bewegungen um die geometrische Achse des Steges 23 und wahlweise lineare Bewegungen in beiden Richtungen der geometrischen Achsen der Stege 23 und 24 möglich.

Bei einem kleinen Spiel / Toleranz in Richtung des nicht vorhandenen Freiheitsgrades ist der Zwischenraum 25 nur sehr wenig größer als der Durchmesser des durchdringenden Steges 23.

Die wahlweise linearen Bewegungen in jeweils einer oder beiden Richtungen der geometrischen Achsen der Stege 23, 24 werden durch die Einführung von Axialspielen X1, X2 bzw. Y1, Y2 in diesen Richtungen zwischen den Gabelwangen 4, 12 ermöglicht. Der innere Wangenabstand der Wangen 4, 12 ist entsprechend groß. Das Aufnahmeelement 2 ist begrenzt gegenüber der Tragkonstruktion über die Kreuzverbindung senkrecht zu der durch die Stege 23, 24 gebildeten Ebene axial drehbar. Eine weitere Verdrehung wird durch Einsatz der Axialhalterung 18 ermöglicht.

Sollen bei dieser Konstruktionswahl die drehenden Bewegungen in größerem Umfang möglich sein, besteht bei einer Ausführungsvariante der Öse-Langloch-Kreuzverbindung mit festen Wangen und Elastomerummantelung eines Steges wahlweise die Möglichkeit, den Steg 23 mit einem Elastomer schlauchartig zu ummanteln und so den Zwischenraum 25 entsprechend dem Durchmesser des Elastomermantels zu vergrößern. So entsteht über das Elastomer ein Formschluss in Richtung des nicht vorhandenen Freiheitsgrades, wobei jetzt größere drehende Bewegungen um den Steg 24 durch die Verformbarkeit des Elastomers möglich sind.

Es sind drehende Bewegungen um die geometrische Achse des Steges 24 und um die geometrische Achse des Steges 23 möglich. Die wahlweise linearen Bewegungen in jeweils einer oder beiden Richtungen der geometrischen Achsen der Stege 23, 24 werden durch die Einführung von Axialspielen X1, X2 bzw. Y1, Y2 in diesen Richtungen zwischen den Gabelwangen 4, 12 ermöglicht. Der innere Wangenabstand der Wangen 4, 12 ist entsprechend groß. Das Aufnahmeelement 2 ist begrenzt gegenüber der Tragkonstruktion über die Kreuzverbindung senkrecht zu der durch die Stege 23, 24 gebildeten Ebene axial drehbar. Eine weitere Verdrehung wird durch Einsatz der Axialhalterung 18 ermöglicht.

Die Variante Öse-Langloch-Kreuzverbindung mit festen Wangen, Schlitten und Hülse enthält einen parallel zum Steg 24 orientierten, langlochähnlichen Zwischenraum 25 zwischen Aufnahmeelement 2 und Steg 24. In dem Zwischenraum 25 läuft ein Schlitten 28 formschlüssig gleitend.

Innerhalb des Schlittens 28 ist eine, z.B. auf einer zum Steg 24 parallelen Achse, gelenkig gelagerte Hülse mit Achse 29 befestigt.

Die Hülse der Hülse mit Achse 29 wird von dem ösenartigen Steg 23 mit Lagerungselement 13 durchdrungen. Der Steg 23 wird so formschlüssig und, z.B. in Richtung der Achse des Steges 23, gleitend in der gelenkig gelagerten Hülse gelagert.

Der Zwischenraum 26 zwischen Steg 23 und Lagerungselement 13 ist für drehende und lineare Bewegungen des Aufnahmeelementes 2 gegenüber dem Lagerungselement 13 ausreichend groß bemessen.
Es sind drehende Bewegungen um die geometrische Achse des Steges 24 und um die geometrische Achse des Steges 23 möglich. Die wahlweise linearen Bewegungen in jeweils einer oder beiden Richtungen der geometrischen Achsen der Stege 23, 24 werden durch die Einführung von Axialspielen X1, X2 bzw. Y1, Y2 in diesen Richtungen zwischen den Gabelwangen 4, 12 und dem Schlitten 28 ermöglicht. Der innere Wangenabstand der Wangen 4, 12 ist entsprechend groß. Das Aufnahmeelement 2 ist gegenüber der Tragkonstruktion über die Axialhalterung 18 senkrecht zu der durch die Stege 23, 24 gebildeten Ebene axial drehbar.

Die Variante Öse-Langloch-Kreuzverbindung mit festen Wangen, Schlitten und Federelementen hat auch einen parallel zum Steg 24 orientierten, langlochähnlichen Zwischenraum 25 zwischen Aufnahmeelement 2 und Steg 24. In dem Zwischenraum läuft ein Schlitten 28 formschlüssig und gleitend. Innerhalb des Schlittens 28 sind senkrecht zum Steg 24 in Richtung Aufnahmeelement 2 bzw. Steg 24 jeweils Federelemente 30 fest angeordnet. Diese Federelemente 30 sind beliebiger Ausführung, z.B. metallische Spiralfedern oder Elastomere. Der Steg 23 zwischen den Federelementen in dem Schlitten ist so elastisch und in Richtung der Achse des Steges 23 gleitend gelagert. So entsteht über das Federelement 30 ein Formschluss in Richtung des nicht vorhandenen Freiheitsgrades, wobei jetzt drehende Bewegungen um den Steg 24 durch die Verformbarkeit des Federelementes 30 möglich sind. Der Schlitten wird zwischen den Federelementen 30 von einem ösenartigen Steg 23 mit Lagerungselement 13 durchdrungen. Der Zwischenraum 26 zwischen Steg 23 und Lagerungselement 13 ist für drehende und lineare Bewegungen des Aufnahmeelementes 2 gegenüber dem Lagerungselement 13 ausreichend groß bemessen.

Es sind drehende Bewegungen um die geometrische Achse des Steges 24 und um die geometrische Achse des Steges 23 möglich. Die wahlweise linearen Bewegungen in jeweils einer oder beiden Richtungen der geometrischen Achsen der Stege 23, 24 werden durch die Einführung von Axialspielen X1, X2 bzw. Y1, Y2 in diesen Richtungen zwischen den Gabelwangen 4, 12 und dem Schlitten 28 ermöglicht. Der innere Wangenabstand der Wangen 4, 12 ist entsprechend groß. Das Aufnahmeelement 2 ist begrenzt gegenüber der Tragkonstruktion über die Kreuzverbindung senkrecht zu der durch die Stege 23, 24 gebildeten Ebene axial drehbar. Eine weitere Verdrehung wird durch Einsatz der Axialhalterung 18 ermöglicht.

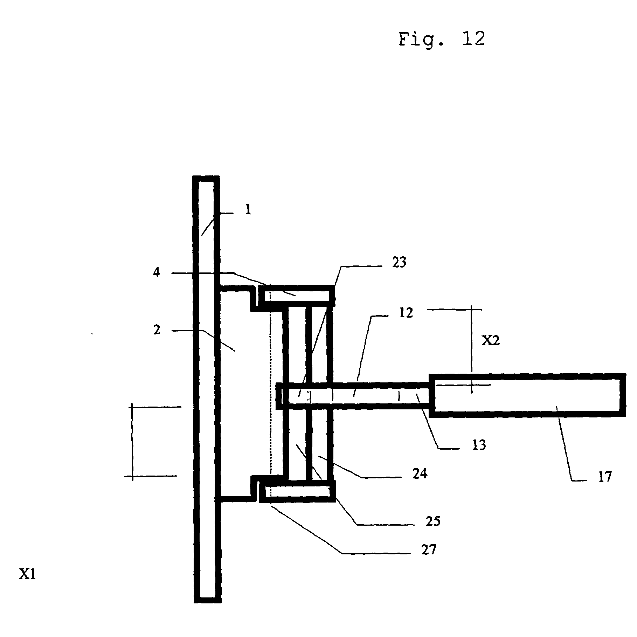

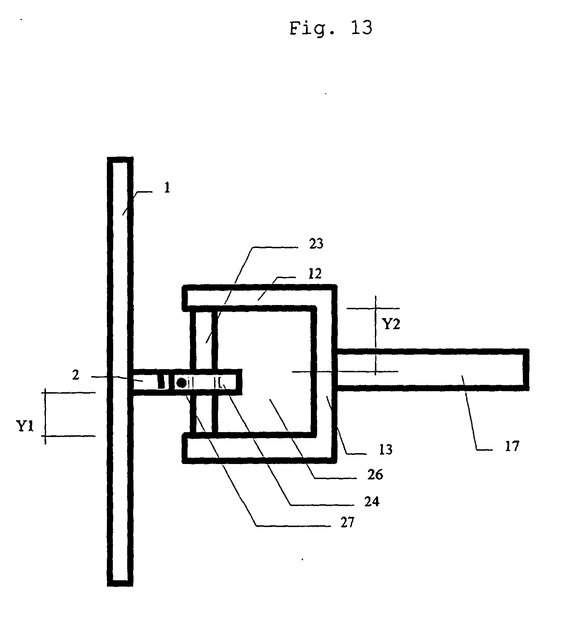

Bei der Ausführungsvariante mit drehbaren Wangen mit Steg nach Fig. 12 und 13 sind drehende Bewegungen um die beiden geometrischen Achsen der Stege 23 und 24 und wahlweise eine lineare Bewegung in beiden Richtungen der geometrischen Achse der Stege 23 und 24 möglich. Die Wangen 4 sind anders als bei den vorbeschriebenen Ausführungsvarianten über eine Achse 27 gegenüber dem Aufnahmeelement 2 drehbar gelagert. Die Kante am Aufnahmeelement 2 zum Zwischenraum 25 ist entsprechend dem Abstand der Achse 27 von der vorgenannten Kante abgerundet. Dadurch werden drehende Bewegungen um die Achse des Steges 24 nicht behindert. Der Zwischenraum 25 sollte nur sehr wenig größer sein als der Durchmesser des Steges 23.

Es sind drehende Bewegungen um die geometrische Achse des Steges 24 und um die geometrische Achse des Steges 23 möglich. Die wahlweise linearen Bewegungen in jeweils einer oder beiden Richtungen der geometrischen Achsen der Stege 23, 24 werden durch die Einführung von Axialspielen X1, X2 bzw. Y1, Y2 in diesen Richtungen zwischen den Gabelwangen 4, 12 ermöglicht. Der innere Wangenabstand der Wangen 4, 12 ist entsprechend groß. Das Aufnahmeelement 2 ist begrenzt gegenüber der Tragkonstruktion über die Kreuzverbindung senkrecht zu der durch die Stege 23, 24 gebildeten Ebene axial drehbar. Eine weitere Verdrehung wird durch Einsatz der Axialhalterung 18 ermöglicht. Die verschiedenen Ausführungsvarianten der Öse-Langlochverbindungen sind auch mit jeweils einarmigem Aufnahmeelement 2 und / oder Lagerungselement 13 möglich. Hierbei haben die Elemente nur jeweils eine Wange 4, 12. Das Lösen der Verbindung wird durch bekannte Mittel verhindert oder ist z.B. für die Montage gewollt.

Bei allen Ausführungs-Arten und -varianten der Kreuzverbindung sind die Axialspiele (X1, X2, Y1, Y2) entlang der geometrischen Achsen der Achsen 5, 9, Zapfen 7 und Stege 23, 24 unabhängig voneinander beliebig wählbar und nehmen wahlweise Werte von Null ab an, wobei der jeweils größte Wert die Summe der Axialspiele (X1, X2, Y1, Y2) entlang einer geometrischen Achse ist (X1+X2 und Y1+Y2).

Das Lagerungselement 13 der Kreuzverbindung ist entweder direkt oder über einen Befestigungsbolzen 17 mit der nicht dargestellten Tragkonstruktion verbunden. Der Befestigungsbolzen 17 ist wahlweise in einer Axialhalterung 18, die mit der nicht dargestellten Tragkonstruktion verbunden ist, drehbar gelagert. Die geometrische Achse der Axialhalterung 18 erstreckt sich üblicherweise in Normalrichtung zur nicht dargestellten Tragkonstruktion, ist parallel zur geometrischen Achse des Befestigungsbolzens 17. In der Axialhalterung 18 ist ein Axiallager 19 vorgesehen, das die drehbare Lagerung des Befestigungsbolzen 17 garantiert.

Zur Vermeidung einer Funktionsbeeinträchtigung durch Fremdkörpereinwirkung, durch Staub oder durch Witterungseinflüsse ist das gesamte Befestigungselement wahlweise durch eine Schutzkappe 20 abgedeckt, durch die nur der Befestigungsbolzen 17 hindurchgeführt ist. Die Schutzkappe 20 greift in ein ringförmiges Anschlussprofil 21, das an der Bauwerksplatte 1 bzw. an nicht dargestellten Beilagen zwischen Bauwerksplatte 1 und Aufnahmeelement 2 vorgesehen ist, ein. Die Schutzkappe 20 ist mit dem Anschlussprofil 21 formschlüssig verbunden.

### Aufstellung der verwendeten Bezugszeichen

- 1: Platte
- 2: Aufnahmeelement, gabelförmig
- 3: Bohrung in der Gabelwange mit Gleitlager/Gleitbohrung in (2)
- 4: Gabelwange von (2)
- 5: Achse von (2)
- 6: Kreuzgelenkstück
- 6.1: Zapfen-Kreuzgelenkstück
- 6.2: Achsen-Kreuzgelenkstück
- 6.3: Zapfen-Achsen-Kreuzgelenkstück
- 7: Zapfen von (6.1)
- 8: Gleitbohrung in (6.2)
- 9: Achse von (13)
- 10: Gleitbohrung in (6.2)
- 11: Bohrung in der Gabelwange mit Gleitlager / Gleitbohrung in (13)
- 12: Gabelwange von (13)
- 13: Lagerungselement, gabelförmig
- 14: Bohrung in (2)
- 15: Bohrung in (13)
- 16:
- 17: Befestigungsbolzen an (13)
- 18: Axialhalterung an (17)
- 19: Axiallager in (18)
- 20: Schutzkappe
- 21: Anschlussprofil
- 22:
- 23: Steg von (13)
- 24: Steg von (2)
- 25: Zwischenraum an (2)
- 26: Zwischenraum an (13)
- 27: Achse durch (2) und (4)
- 28: Schlitten, in (25) gleitend
- 29: Hülse mit Achse, in (28) lagernd
- 30: Federelement oder Elastomer

## Patentansprüche

1. Befestigungselement zur spannungsfreien Befestigung von Platten an Tragkonstruktionen z.B. von Bauwerkskörpern, bestehend aus einer Kreuzgelenkverbindung mit sich schneidenden bzw. in einem gegenseitigen Abstand zueinander verlaufenden Achsen, **dadurch gekennzeichnet, dass** ein gabelförmiges Aufnahmeelement (2) mit zwei gleichgerichteten Wangen (4) oder ein einarmiges Aufnahmeelement (2) mit einer Wange (4) und ein gabelförmiges Lagerungselement (13) mit zwei gleichgerichteten Wangen (12) oder ein einarmiges Lagerungselement (13) mit einer Wange (12) ein Kreuzgelenkstück der Kreuzgelenkverbindung umgreifen, wobei das Kreuzgelenkstück wahlweise als ein Zapfen-Kreuzgelenkstück (6.1) mit sich im rechten Winkel kreuzenden geometrischen Achsen und jeweils zwei fluchtenden Zapfen (7) ausgebildet ist, wobei die Zapfen (7) in Gleitbohrungen (3) des Aufnahmeelementes (2) und Gleitbohrungen (11) des Lagerungselementes (13) gelagert angeordnet sind, oder als ein Achsen-Kreuzgelenkstück (6.2) mit zwei im definierten Achsabstand zueinander angeordneten Gleitbohrungen (8, 10) ausgebildet ist, wobei die geometrischen Achsen der einen Gleitbohrung (8) und der anderen Gleitbohrung (10) im rechten Winkel aufeinander stehen und in diesen die in dem Aufnahmeelement (2) und dem Lagerungselement (13) befestigten Achsen (5, 9) gleitend gelagert angeordnet sind, oder als ein Zapfen-Achsen-Kreuzgelenkstück (6.3) mit zwei fluchtenden Zapfen (7) sowie einer dazu im rechten Winkel angeordneten Gleitbohrung (8) im Zapfen-Achsen-Kreuzgelenkstück (6.3) ausgebildet ist, wobei die Zapfen (7) in Gleitbohrungen (3) des Aufnahmeelementes (2) oder dem Lagerungselement (13) und in der Gleitbohrung (8) die Achse (5) des Aufnahmeelementes (2) oder die Achse (9) des Lagerungselementes (13) gelagert angeordnet sind, wobei das Lagerungselement (13) wahlweise über einen Befestigungsbolzen (17) und wahlweise über eine als Drehlager ausgebildete Axialhalterung (18) mit der Tragkonstruktion und das Aufnahmeelement (2) mit der Platte (1) verbunden ist, wobei Aufnahmeelement und Lagerungselement gegenüberliegend und in der Längsachse rechtwinklig verdreht zueinander angeordnet sind und wobei das Aufnahmeelement (2) wahlweise einzelne oder kombinierte lineare Bewegungen entlang der jeweiligen geometrischen Achsen der Achsen oder Zapfen und/oder in jeder Richtung wahlweise einzelne oder kombinierte drehende Bewegungen um die jeweiligen geometrischen Achsen der Achsen oder Zapfen gegenüber einem Lagerungselement (13) ausführend angeordnet ist.

2. Befestigungselement zur spannungsfreien Befestigung von Platten an Tragkonstruktionen z.B. von Bauwerkskörpern bestehend aus einer Kreuzverbindung mit sich schneidenden bzw. in einem gegenseitigen Abstand zueinander verlaufenden Achsen **dadurch gekennzeichnet, dass** die Kreuzverbindung als Öse-Langloch-Kreuzverbindung ausgebildet ist, bei der ein Aufnahmeelement (2) mit der Platte (1)und ein Lagerungselement (13) über eine als Drehlager ausgebildete Axialhalterung (18) mit der Tragkonstruktion verbunden ist, dass das jeweils arm-oder gabelförmige Aufnahmeelement (2) und das arm- oder gabelförmige Lagerungselement (13) in kreuzförmiger Lage zueinander stehen, zwischen den Gabelwangen Stege (23,24) aufweisen und um die senkrecht zur von beiden Stegen (23, 24) gebildeten Ebene stehende geometrische Achse gegeneinander von sich aus in begrenztem Maße sowie mit der Axialhalterung (18) vollständig verdrehbar angeordnet sind und ein parallel zum Steg (24) orientierter, langlochähnlicher Zwischenraum (25) zwischen Aufnahmeelement (2) und Steg (24) ausgebildet ist, der von einem ösenartigen Steg (23) des Lagerungselementes (13) durchdrungen ist, wobei der Zwischenraum (26) zwischen Steg (23) und Lagerungselement (13) für drehende und lineare Bewegungen des Aufnahmeelementes (2) gegenüber dem Lagerungselement (13) ausreichend groß ausgeführt ist und der Zwischenraum (25) so bemessen ist, dass der dem Lagerungselement zugeordnete Steg (23) in Richtung der Achse des dem Aufnahmeelement zugeordneten Steges (24) gleitend gelagert ist.

3. Befestigungselement nach Anspruch 2, **dadurch gekennzeichnet, dass** das Aufnahmeelement (2) der Kreuzverbindung mit einem Lagerungselement (13) verbunden ist und das Aufnahmeelement (2) wahlweise einzelne oder kombinierte lineare Bewegungen entlang der jeweiligen geometrischen Achsen der Stege und/oder in jeder Richtung wahlweise einzelne oder kombinierte drehende Bewegungen um die jeweiligen geometrischen Achsen der Stege gegenüber einem Lagerungselement (13) ausführend angeordnet ist.

4. Befestigungselement nach Anspruch 1 bis 3, **dadurch gekennzeichnet, dass** die Axialspiele (X1, X2, Y1, Y2) entlang der geometrischen Achsen der Achsen (5, 9), Zapfen (7) und Stege (23, 24) vorgesehen sind, deren Größen unabhängig voneinander beliebig wählbar sind und walweise Werte von Null ab annehmen, wobei der jeweils größte Wert die Summe der Axialspiele (X1, X2, Y1, Y2) entlang einer geometrischen Achse ist (X1+X2 und Y1+Y2).

5. Befestigungselement nach Anspruch 1 bis 4, **dadurch gekennzeichnet, dass** das Aufnahmeelement (2) der Kreuzverbindung um die beiden geometrischen Achsen der Zapfen (7) oder Achsen (5, 9) oder Stege (23, 24) in jeder Richtung wahlweise einzeln oder kombiniert drehbar mit einem Lagerungselement (13) verbunden ist.

6. Befestigungselement nach Anspruch 1 und 3 bis 5, **dadurch gekennzeichnet, dass** die Aufnahmeelement (2) der Kreuzgelenkverbindung über ein Zapfenkreuz-Gelenkstück (6.1) mit einem Lagerungselement (13) in jeder Richtung der Schnittebene oder der parallelen Schnittebenen beider geometrischer Achsen der Zapfen (7) wahlweise einzeln oder kombiniert verschiebbar verbunden ist, wobei das Zapfenkreuz-Gelenkstück (6.1) mit den Zapfen (7) in Gleitbohrungen (3, 11) in den Gabelwangen (4) des Aufnahmeelementes (2) und des Lagerungselementes (13) verschiebbar gelagert ist und zwischen jeder Gabelwange (4) des Aufnahmeelementes (2) und dem Kreuzgelenkstück (6.1) ein Axialspiel (Y1, Y2) sowie zwischen jeder Gabelwange (4) der Lagerungselement (13) und dem Kreuzgelenkstück (6.1) ein Axialspiel (X1, X2) vorgesehen ist.

7. Befestigungselement nach Anspruch 1 und 3 bis 6, **dadurch gekennzeichnet, dass** das Aufnahmeelement (2) der Kreuzgelenkverbindung über ein Achsenkreuz-Gelenkstück (6.2) mit einem Lagerungselement (13) in jeder Richtung der parallelen Schnittebenen beider geometrischer Achsen der Gleitbohrungen (8, 10) wahlweise einzeln oder kombiniert verschiebbar verbunden ist, wobei die Achsen (5, 9) fest in den Bohrungen (14, 15) der Gabelwangen (4) des Aufnahmeelementes (2) und des Lagerungselementes (13) eingesetzt sind und zu dieser verschiebbaren Lagerung zwischen jeder Gabelwange (4) des Aufnahmeelementes (2) und dem Achsenkreuz-Gelenkstück (6.2) ein Axialspiel (Y1, Y2) sowie zwischen jeder Gabelwange (4) des Lagerungselementes (13) und dem Achsenkreuz-Gelenkstück (6.2) ein Axialspiel (X1, X2) vorgesehen ist.

8. Befestigungselement nach Anspruch 1 und 3 bis 7, **dadurch gekennzeichnet, dass** das Aufnahmeelement (2) der Kreuzgelenkverbindung über ein Zapfen-Achsen-Kreuzgelenkstück (6.3) mit einem Lagerungselement (13) in jeder Richtung der parallelen Schnittebenen beider geometrischer Achsen der Zapfen (7) und Achse (5 oder 9) wahlweise einzeln oder kombiniert verschiebbar verbunden ist, wobei das Zapfen-Achsen-Kreuzgelenkstück (6.3) mit der Gleitbohrung (8 oder 10) auf der fest in den Bohrungen (14 oder 15) der Gabelwangen (4) des Aufnahmeelementes (2) oder des Lagerungselementes (13) sitzenden Achse (5 oder 9) gleitend angeordnet ist und die Zapfen (7) in Gleitbohrungen (3 oder 11) in den Gabelwangen (4) des Aufnahmeelementes (2) oder des Lagerungselementes (13) verschiebbar gelagert sind und zwischen jeder Gabelwange (4) der Aufnahmeelement (2) und dem Zapfen-Achsen-Kreuzgelenkstück (6.3) ein Axialspiel (Y1, Y2) sowie zwischen jeder Gabelwange (4) des Lagerungselementes (13) und dem Zapfen-Achsen-Kreuzgelenkstück (6.3) ein Axialspiel (X1, X2) vorgesehen ist.

9. Befestigungselement nach Anspruch 2 bis 5, **dadurch *gekennzeichnet,* dass** die Öse-Langloch-Kreuzverbindung (23, 24) wahlweise als eine Öse-Langloch-Kreuzverbindung mit festen Wangen, als eine Öse-Langloch-Kreuzverbindung mit festen Wangen und einer Elastomerummantelung eines Steges, als eine Öse-Langloch-Verbindung mit drehbaren Wangen mit Steg, als Öse-Langloch-Kreuzverbindung mit festen Wangen, Schlitten und Hülse und als Öse-Langloch-Kreuzverbindung mit festen Wangen, Schlitten und Federelementen ausgebildet ist.

10. Befestigungselement nach Anspruch 2 bis 5 und 9, **dadurch gekennzeichnet, dass** die Öse-Langloch-Kreuzverbindung mit festen Wangen (4, 12) mit einem parallel zu dem dem Aufnahmeelement zugeordneten Steg (24) orientierten, langlochähnlichen Zwischenraum (25) zwischen Aufnahmeelement (2) und dem dem Aufnahmeelement zugeordneten Steg (24) ausgebildet ist und dieser von einem ösenartigendem Lagerungselement zugeordneten Steg (23) mit Lagerungselement (13) durchdrungen ist, wobei der Zwischenraum (26) zwischen dem dem Lagerungselement zugeordneten Steg (23) und Lagerungselement (13) für drehende und lineare Bewegungen des Aufnahmeelementes (2) gegenüber dem Lagerungselement (13) ausreichend groß ausgeführt ist, der Zwischenraum (25) so bemessen ist, dass der dem Lagerungselement zugeordneten Steg (23) formschlüssig und in Richtung der Achsen der Stege (23, 24) gleitend gelagert ist.

11. Befestigungselement nach Anspruch 2 bis 5 und 9 bis 10, **dadurch gekennzeichnet, dass** die Öse-Langloch-Kreuzverbindung mit festen Wangen und einer Elastomerummantelung mit einem parallel zu dem dem Aufnahmeelement zugeordneten Steg (24) orientierten, langlochähnlichen Zwischenraum (25) zwischen Aufnahmeelement (2) und dem dem Aufnahmeelement zugeordneten Steg (24) ausgebildet ist und dieser von einem ösenartigen, dem Lagerungselement zugeordneten Steg (23) mit Lagerungselement (13) durchdrungen ist, wobei der Zwischenraum (26) zwischen dem dem Lagerungselement zugeordneten Steg (23) und Lagerungselement (13) für drehende und lineare Bewegungen des Aufnahmeelementes (2) gegenüber dem Lagerungselement (13) ausreichend groß ausgeführt ist, der Zwischenraum (25) so bemessen ist, dass der mit einem schlauchartigen Elastomer ummantelte dem Lagerungselement zugeordneten Steg (23) formschlüssig und in Richtung der Achsen der Stege (23, 24) gleitend gelagert ist.

12. Befestigungselement nach Anspruch 2 bis 5 und 9 bis 11, **dadurch gekennzeichnet, dass** die Öse-Langloch-Kreuzverbindung mit festen Wangen, Schlitten und Hülse mit einem parallel zu dem dem Aufnahmeelement zugeordneten Steg (24) orientierten langlochähnlichen Zwischenraum (25) zwischen Aufnahmeelement (2) und dem dem Aufnahmeelement zugeordneten Steg (24) ausgebildet ist, in dem ein Schlitten (28) mit einer auf einer zum Steg (24) parallelen Achse gelenkig gelagerten Hülse (29) formschlüssig gleitend angeordnet ist, und die Hülse der Hülse mit Achse (29) von einem ösenartigen, dem Lagerungselement zugeordneten Steg (23) mit Lagerungselement (13) durchdrungen wird, wobei der Zwischenraum (26) zwischen dem dem Lagerungselement zugeordneten Steg (23) und Lagerungselement (13) für drehende und lineare Bewegungen des Aufnahmeelementes (2) gegenüber dem Lagerungselement (13) ausreichend groß bemessen ist, der dem Lagerungselement zugeordnete Steg (23) formschlüssig und in Richtung der Achse des dem Lagerungselement zugeordneten Steges (23) gleitend in der gelenkig gelagerten Hülse gelagert ist.

13. Befestigungselement nach Anspruch 2 bis 5 und 9 bis 12, **dadurch gekennzeichnet, dass** die Öse-Langloch-Kreuzverbindung mit festen Wangen, Schlitten und Federelementen mit einem parallel zu dem dem Aufnahmeelement zugeordneten Steg (24) orientierten, langlochähnlichen Zwischenraum (25) zwischen Aufnahmeelement (2) und dem dem Aufnahmeelement zugeordneten Steg (24) ausgebildet ist, in dem ein Schlitten (28) mit senkrecht zu dem dem Aufnahmeelement zugeordneten Steg (24) in Richtung Aufnahmeelement (2) angeordneten Federelementen (30) formschlüssig gleitend angeordnet ist, und der von einem ösenartigen, dem Lagerungselement zugeordneten Steg (23) mit Lagerungselement (13) zwischen den Federelementen (30) durchdrungen wird, wobei der Zwischenraum (26) zwischen dem dem Lagerungselement zugeordneten Steg (23) und Lagerungselement (13) für drehende und lineare Bewegungen des Aufnahmeelementes (2) gegenüber dem Lagerungselement (13) ausreichend groß bemessen ist, der dem Lagerungselement zugeordnete Steg (23) zwischen den Federelementen in dem Schlitten elastisch und in Richtung der Achse des dem Lagerungselement zugeordneten Steges (23) gleitend gelagert ist.

14. Befestigungselement nach Anspruch 2 bis 5 und 9 bis 13, **dadurch gekennzeichnet, dass** die Öse-Langloch-Kreuzverbindung mit drehbaren Wangen mit Steg mit einem parallel zu dem dem Aufnahmeelement zugeordneten Steg (24) orientierten, langlochähnlichen Zwischenraum (25) zwischen Aufnahmeelement (2) und dem dem Aufnahmeelement zugeordneten Steg (24) und mit um eine im Bereich des Aufnahmeelementes (2) zum Steg (24) parallele Achse drehbaren Wangen (4), die fest mit dem dem Aufnahmeelement zugeordneten Steg (24) verbunden sind, ausgebildet ist und dieser von einem Ösenartigen, dem Lagerungselement zugeordneten Steg (23) mit Lagerungselement (13) durchdrungen ist, wobei der Zwischenraum (26) zwischen dem dem Lagerungselement zugeordneten Steg (23) und Lagerungselement (13) für drehende und lineare Bewegungen des Aufnahmeelementes (2) gegenüber dem Lagerungselement (13) ausreichend groß ausgeführt ist, der Zwischenraum (25) so bemessen ist, dass der dem Lagerungselement zugeordnete Steg (23) formschlüssig und in Richtung der Achsen der Stege (23, 24) gleitend gelagert ist.

15. Befestigungselement nach Anspruch 1 bis 14, **dadurch gekennzeichnet, dass** wahlweise die Verbindung von Aufnahmeelement (2) mit Platte (1) und Lagerungselement (13) mit dem Bolzen (17) zu Aufnahmeelement (2) mit dem Bolzen (17) und Lagerungselement (13) mit Platte (1) vertauschbar ausgeführt sind.

16. Befestigungselement nach Anspruch 1 bis 15, **dadurch gekennzeichnet, dass** das Lagerungselement (13) mit einem Befestigungsbolzen (17) verbunden ist und dieser wahlweise in einer Axialhalterung (18), die mit einem Axiallager (19) versehen ist, drehbar gelagert ist.

17. Befestigungselement nach Anspruch 1 bis 16, **dadurch gekennzeichnet, dass** die Axialhalterung (18) mit der Tragkonstruktion verbunden ist.

18. Befestigungselement nach Anspruch 1 bis 17, **dadurch gekennzeichnet, dass** alle Bauteile zwischen dem Aufnahmeelement (2) und der Axialhalterung (18) einschließlich dem Aufnahmeelement (2) und der Axialhalterung (18) selbst wahlweise mit einer Schutzkappe (20), die mit einem Anschlussprofil (21) formschlüssig oder kraftschlüssig verbunden ist, versehen ist.

19. Befestigungselement nach Anspruch 1 bis 18, **dadurch *gekennzeichnet,* daß** die beiden geometrischen Achsen der Zapfen (7) oder Achsen (5, 9) oder Stege (23, 24) über bekannte Mittel wahlweise einzeln gegen Drehungen blockierbar ausgeführt sind.

20. Befestigungselement nach Anspruch 1 bis 19, **dadurch *gekennzeichnet,* daß** alle jeweils möglichen 3 drehenden und 2 linearen Freiheitsgrade einzeln oder in Kombination wahlweise realisierbar sind.

## Claims

1. A mounting element for mounting plates on supporting structures such as, e.g., structural members in a stressfree fashion, consisting of a universal joint coupling with intersecting axles or axles that extend at a distance from one another, **characterized in that** a yoke-shaped receptacle element (2) with two identically directed bearers (4) or a one-armed receptacle element (2) with one bearer (4) and a yoke-shaped bearing element (13) with two identically directed bearers (12) or a one-armed bearing element (13) with one bearer (12) encompass a universal joint part of the universal joint coupling, wherein the universal joint part is selectively realized in the form of a pin-type universal joint part (6.1) with geometric axes that intersect at a right angle and two respective aligned pins (7), wherein the pins (7) are supported in slide bores (3) of the receptacle element (2) and slide bores (11) of the bearing element (13), or in the form of an axle-type universal joint part (6.2) with two slide bores (8, 10) that are arranged at a defined axle spacing from one another, wherein the geometric axes of one slide bore (8) and the other slide bore (10) extend orthogonal to one another and the axles (5, 9) mounted in the receptacle element (2) and the bearing element (13) are arranged in said slide bores such that they are supported in a sliding fashion, or in the form of a pin-axle-type universal joint part (6.3) with two aligned pins (7), as well as a slide bore (8) arranged orthogonal thereto in the pin-axle-type universal joint part (6.3), wherein the pins (7) are arranged such that they are supported in slide bores (3) of the receptacle element (2) or the bearing element (13) and the axle (5) of the receptacle element (2) or the axle (9) of the bearing element (13) is arranged such that it is supported in the slide bore (8), wherein the bearing element (13) is connected to the supporting structure selectively by means of a mounting bolt (17) and selectively by means of an axial mounting (18) in the form of a pivot bearing and the receptacle element (2) is connected to the plate (1), wherein the receptacle element and the bearing element are arranged opposite of one another and such that they are orthogonally turned relative to one another in the longitudinal axis, and wherein the receptacle element (2) is arranged such that it selectively carries out individual or combined linear movements along the respective geometric axes of the axles or pins and/or in each direction selectively carries out individual or combined rotational movements about the respective geometric axes of the axles or pins relative to a bearing element (13).

2. A mounting element for mounting plates on supporting structures such as, e.g., structural members in a stressfree fashion, consisting of a cross connection with intersecting axles or axles that extend at a distance from one another, **characterized in that** the cross connection is realized in the form of an eye-slot-type cross connection, in which a receptacle element (2) is connected to the plate (1) and a bearing element (13) is connected to the supporting structure by means of an axial mounting (18) in the form of a pivot bearing, **in that** the respective arm-shaped or yoke-shaped receptacle element (2) and the arm-shaped or yoke-shaped bearing element (13) are arranged relative to one another in a crosswise position, feature webs (23, 24) between the yoke bearers and are arranged such that they are rotatable relative to one another to a limited degree on their own, as well as completely rotatable together with the axial mounting (18) about the geometric axis that extends perpendicular to the plane formed by both webs (23, 24), wherein a slot-like intermediate space (25) that is directed parallel to the web (24) is formed between the receptacle element (2) and the web (24) and penetrated by an eye-like web (23) of the bearing element (13), and wherein the intermediate space (26) between the web (23) and the bearing element (13) is designed sufficiently large for rotational and linear movements of the receptacle element (2) relative to the bearing element (13) and the intermediate space (25) is dimensioned such that the web (23) assigned to the bearing element is supported in a sliding fashion in the direction of the axis of the web (24) assigned to the receptacle element.

3. The mounting element according to Claim 2, **characterized in that** the receptacle element (2) of the cross connection is connected to a bearing element (13) and the receptacle element (2) is arranged such that it selectively carries out individual or combined linear movements along the respective geometric axes of the webs and/or in each direction selectively carries out individual or combined rotational movements about the respective geometric axes of the webs relative to a bearing element (13).

4. The mounting element according to Claims 1 to 3, **characterized in that** the axial clearances (X1, X2, Y1, Y2) are provided along the geometric axes of the axles (5, 9), pins (7) and webs (23, 24), wherein the dimensions of these axial clearances can be selected arbitrarily and independently of one another and selectively assume values that begin at zero, wherein the respectively greatest value is the sum of the axial clearances (X1, X2, Y1, Y2) along a geometric axis (X1+X2 and Y1+Y2).

5. The mounting element according to Claims 1 to 4, **characterized in that** the receptacle element (2) of the cross connection is connected to a bearing element (13) such that it is selectively rotatable in each direction about the two geometric axes of the pins (7) or axles (5, 9) or webs (23, 24) individually or in a combined fashion.

6. The mounting element according to Claims 1 and 3 to 5, **characterized in that** the receptacle element (2) of the universal joint coupling is connected to a bearing element (13) by means of a cross pin joint part (6.1) such that it can be selectively displaced in each direction of the sectional plane or the parallel sectional planes of both geometric axes of the pins (7) individually or in a combined fashion, wherein the cross pin joint part (6.1) with the pins (7) is displaceably supported in slide bores (3, 11) in the yoke bearers (4) of the receptacle element (2) and the bearing element (13), and wherein an axial clearance (Y1, Y2) is provided between each yoke bearer (4) of the receptacle element (2) and the universal joint part (6.1) and an axial clearance (X1, X2) is provided between each yoke bearer (4) of the bearing element (13) and the universal joint part (6.1).

7. The mounting element according to Claims 1 and 3 to 6, **characterized in that** the receptacle element (2) of the universal joint coupling is connected to a bearing element (13) by means of a cross axle joint part (6.2) such that it can be selectively displaced in each direction of the parallel sectional planes of both geometric axes of the slide bores (8, 10) individually or in a combined fashion, wherein the axles (5, 9) are rigidly inserted into the bores (14, 15) of the yoke bearers (4) of the receptacle element (2) and the bearing element (13), and wherein an axial clearance (Y1, Y2) is provided between each yoke bearer (4) of the receptacle element (2) and the cross axle joint part (6.2) and an axial clearance (X1, X2) is provided between each yoke bearer (4) of the bearing element (13) and the cross axle joint part (6.2) in order to realize this displaceable support.

8. The mounting element according to Claims 1 and 3 to 7, **characterized in that** the receptacle element (2) of the universal joint coupling is connected to a bearing element (13) by means of a pin-axle universal joint part (6.3) such that it can be selectively displaced in each direction of the parallel sectional planes of both geometric axes of the pins (7) and the axle (5 or 9) individually or in a combined fashion, wherein the pin-axle universal joint part (6.3) is arranged in a sliding fashion on the axle (5 or 9) that is rigidly seated in the bores (14 or 15) of the yoke bearers (4) of the receptacle element (2) or the bearing element (13) with the slide bore (8 or 10), wherein the pins (7) are displaceably supported in slide bores (3 or 11) in the yoke bearers (4) of the receptacle element (2) or the bearing element (13), and wherein an axial play (Y1, Y2) is provided between each yoke bearer (4) of the receptacle element (2) and the pin-axle universal joint part (6.3) and an axial play (X1, X2) is provided between each yoke bearer (4) of the bearing element (13) and the pin-axle universal joint part (6.3).

9. The mounting element according to Claims 2 to 5, **characterized in that** the eye-slot cross connection (23, 24) is selectively realized in the form of an eye-slot cross connection with rigid bearers, in the form of an eye-slot cross connection with rigid bearers and an elastomer casing of one web, in the form of an eye-slot cross connection with rotatable bearers with web, in the form of an eye-slot cross connection with rigid bearers, slide and sleeve and in the form of an eye-slot cross connection with rigid bearers, slide and spring elements.

10. The mounting element according to Claims 2 to 5 and 9, **characterized in that** the eye-slot cross connection with rigid bearers (4, 12) is realized with a slot-like intermediate space (25) that is directed parallel to the web (24) assigned to the receptacle element and lies between the receptacle element (2) and the web (24) assigned to the receptacle element, wherein said intermediate space is penetrated by an eye-like web (23) with bearing element (13) that is assigned to the bearing element, and wherein the intermediate space (26) between the web (23) assigned to the bearing element and the bearing element (13) is realized sufficiently large for rotational and linear movements of the receptacle element (2) relative to the bearing element (13) and the intermediate space (25) is dimensioned such that the web (23) assigned to the bearing element is supported in a form-fitting and sliding fashion in the direction of the axes of the webs (23, 24).

11. The mounting element according to Claims 2 to 5 and 9 to 10, **characterized in that** the eye-slot cross connection with rigid bearers and an elastomer casing is realized with a slot-like intermediate space (25) that is directed parallel to the web (24) assigned to the receptacle element and lies between the receptacle element (2) and the web (24) assigned to the receptacle element, wherein said intermediate space is penetrated by an eye-like web (23) with bearing element (13) that is assigned to the bearing element, and wherein the intermediate space (26) between the web (23) assigned to the bearing element and the bearing element (13) is realized sufficiently large for rotational and linear movements of the receptacle element (2) relative to the bearing element (13) and the intermediate space (25) is dimensioned such that the web (23) that is assigned to the bearing element and encased with a tubular elastomer is supported in a form-fitting and sliding fashion in the direction of the axes of the webs (23, 24).

12. The mounting element according to Claims 2 to 5 and 9 to 11, **characterized in that** the eye-slot cross connection with rigid bearers, slide and sleeve is realized with a slot-like intermediate space (25) that is directed parallel to the web (24) assigned to the receptacle element and lies between the receptacle element (2) and the web (24) assigned to the receptacle element, wherein a slide (28) with a sleeve (29) that is supported in an articulated fashion on an axle extending parallel to the web (24) is arranged in said intermediate space such that it slides in a form-fitting fashion and the sleeve of the sleeve with axle (29) is penetrated by an eye-like web (23) with bearing element (13) that is assigned to the bearing element, and wherein the intermediate space (26) between the web (23) assigned to the bearing element and the bearing element (13) is realized sufficiently large for rotational and linear movements of the receptacle element (2) relative to the bearing element (13) and the web (23) assigned to the bearing element is supported in the articulated-support sleeve in a form-fitting and sliding fashion in the direction of the axis of the web (23) assigned to the bearing element.

13. The mounting element according to Claims 2 to 5 and 9 to 12, **characterized in that** the eye-slot cross connection with rigid bearers, slide and spring elements is realized with a slot-like intermediate space (25) that is directed parallel to the web (24) assigned to the receptacle element and lies between the receptacle element (2) and the web (24) assigned to the receptacle element, wherein a slide (28) with spring elements (30) that are arranged perpendicular to the web (24) assigned to the receptacle in the direction of the receptacle element (2) is arranged in said intermediate space such that it slides in a form-fitting fashion and the intermediate space is penetrated between the spring elements (30) by an eye-like web (23) with bearing element (13) that is assigned to the bearing element, and wherein the intermediate space (26) between the web (23) assigned to the bearing element and the bearing element (13) is realized sufficiently large for rotational and linear movements of the receptacle element (2) relative to the bearing element (13) and the web (23) assigned to the bearing element is supported in the slide between the spring elements in an elastic and sliding fashion in the direction of the axis of the web (23) assigned to the bearing element.

14. The mounting element according to Claims 2 to 5 and 9 to 13, **characterized in that** the eye-slot cross connection with rotatable bearers with web is realized with a slot-like intermediate space (25) that is directed parallel to the web (24) assigned to the receptacle element and lies between the receptacle element (2) and the web (24) assigned to the receptacle element, as well as with bearers (4) that are rotatable about an axis that extends parallel to the web (24) in the region of the receptacle element (2) and rigidly connected to the web (24) assigned to the receptacle element, wherein said intermediate space is penetrated by an eye-like web (23) with bearing element (13) that is assigned to the bearing element, and wherein the intermediate spaces (26) between the web (23) assigned to the bearing element and the bearing element (13) is realized sufficiently large for rotational and linear movements of the receptacle element (2) relative to the bearing element (13) and the intermediate space (25) is dimensioned such that the web (23) assigned to the bearing element is supported in a form-fitting and sliding fashion in the direction of the axes of the webs (23, 24).

15. The mounting element according to Claims 1 to 14, **characterized in that** the connections of the receptacle element (2) to the plate (1) and the bearing element (13) to the bolt (17) are selectively realized such that they are interchangeable with connections of the receptacle element (2) to the bolt (17) and the bearing element (13) to the plate (1).

16. The mounting element according to Claims 1 to 15, **characterized in that** the bearing element (13) is connected to a mounting bolt (17) and this mounting bolt is selectively supported in a rotatable fashion in an axial mounting (18) that is provided with an axial bearing (19).

17. The mounting element according to Claims 1 to 16, **characterized in that** the axial mounting (18) is connected to the supporting structure.

18. The mounting element according to Claims 1 to 17, **characterized in that** all components between the receptacle element (2) and the axial mounting (18) including the receptacle element (2) and the axial mounting (18) are selectively provided with a protective cap (20) that is connected to a connecting profile (21) in a form-fitting or non-positive fashion.

19. The mounting element according to Claims 1 to 18, **characterized in that** the two geometric axes of the pins (7) or axles (5, 9) or webs (23, 24) are selectively realized such that they can be individually blocked from rotating with conventional means.

20. The mounting element according to Claims 1 to 19, **characterized in that** all respectively possible 3 rotational and 2 linear degrees of freedom can be selectively realized individually or in combination.

## Revendications

1. Elément de fixation pour la fixation sans tension de plaques sur des structures porteuses par exemple de corps d'ouvrage de construction, consistant en un raccord par joint à croisillon avec des axes se coupant ou s'étendant à distance les uns des autres, **caractérisé en ce qu'**un élément récepteur en forme de fourche (2) entoure par deux mâchoires (4) orientées dans le même sens ou qu'un élément récepteur à un bras (2) entoure par une mâchoire (4) et qu'un élément d'appui en forme de fourche (13) entoure par deux mâchoires (12) orientées dans le même sens ou qu'un élément d'appui à un bras (13) entoure par une mâchoire (12) une pièce de joint à croisillon du raccord par joint à croisillon, la pièce de joint à croisillon étant réalisée facultativement sous forme d'une pièce de joint à croisillon à tourillon (6.1) avec des axes géométriques se croisant à angle droit et respectivement deux tourillons alignés (7), les tourillons (7) étant disposés en appui dans des alésages de coulissement (3) de l'élément récepteur (2) et des alésages de coulissement (11) de l'élément d'appui (13) ou sous forme d'une pièce de joint à croisillon à axe (6.2) avec deux alésages de coulissement (8, 10) disposés avec un entraxe défini l'un par rapport à l'autre, les axes géométriques d'un alésage de coulissement (8) et de l'autre alésage de coulissement (10) étant à angle droit l'un par rapport à l'autre et les axes (5, 9) fixés dans l'élément récepteur (2) et l'élément d'appui (13) étant disposés de manière à pouvoir coulisser dans ceux-ci ou une pièce de joint à croisillon à tourillon-axe (6.3) étant réalisée avec deux tourillons alignés (7) ainsi qu'un alésage de coulissement (8) disposé à angle droit par rapport à ceux-ci dans la pièce de joint à croisillon à tourillon-axe (6.3), les tourillons (7) étant disposés en appui dans des alésages de coulissement (3) de l'élément récepteur (2) ou dans l'élément d'appui (13) et l'axe (5) de l'élément récepteur (2) ou l'axe (9) de l'élément d'appui (13) dans l'alésage de coulissement (8), l'élément d'appui (13) étant raccordé facultativement par un goujon de fixation (17) et facultativement par un support axial (18) réalisé sous forme de coussinet de pivotement à la structure porteuse et l'élément récepteur (2) à la plaque (1), l'élément récepteur et l'élément d'appui étant disposés face à face et tournés l'un par rapport à l'autre orthogonalement dans le sens longitudinal et l'élément récepteur (2) étant disposé de manière à exécuter au choix des mouvements linéaires individuels ou combinés le long des axes géométriques respectifs des axes ou tourillons et/ou dans tous les sens autour des axes géométriques respectifs des axes ou tourillons par rapport à un élément d'appui (13).

2. Elément de fixation pour la fixation sans tension de plaques sur des structures porteuses par exemple de corps d'ouvrage de construction, consistant en un raccord par joint à croisillon avec des axes se coupant ou s'étendant à distance les uns des autres, **caractérisé en ce que** le joint à croisillon est réalisé sous forme d'un joint à croisillon à oeillet-trou oblong dans lequel un élément récepteur (2) est raccordé à la plaque (1) et un élément d'appui (13) via un support axial (18) réalisé sous forme de coussinet de pivotement à la structure porteuse, que l'élément récepteur respectivement en forme de bras ou de fourche (2) et l'élément d'appui respectivement en forme de bras ou de fourche (13) sont en position croisée l'un par rapport à l'autre, présentent des traverses (23, 24) entre les mâchoires à fourches et sont disposés de manière à pouvoir tourner totalement l'un par rapport à l'autre dans une amplitude limitée en partant d'eux-mêmes et avec le support axial (18) autour de l'axe géométrique vertical placé perpendiculairement au plan formé par les deux traverses (23, 24) et qu'est réalisé entre l'élément récepteur (2) et la traverse (24) un intervalle (25) orienté parallèlement à la traverse (24) et similaire à un trou oblong qui est traversé par une traverse de type oeillet (23) de l'élément d'appui (13), l'intervalle (26) entre la traverse (23) et l'élément d'appui (13) étant réalisé suffisamment large pour permettre des mouvements rotatifs et linéaires de l'élément récepteur (2) par rapport à l'élément d'appui (13) et l'intervalle (25) étant dimensionné de manière à ce que la traverse (23) associée à l'élément d'appui s'appuie de manière à pouvoir coulisser en direction de l'axe de la traverse (24) associée à l'élément récepteur.

3. Elément de fixation selon la revendication 2, **caractérisé en ce que** l'élément récepteur (2) du raccord à croisillon est raccordé à un élément d'appui (13) et que l'élément récepteur (2) est disposé de manière à exécuter au choix des mouvements linéaires individuels ou combinés le long des axes géométriques respectifs des traverses et/ou dans tous les sens au choix des mouvements linéaires individuels ou combinés autour des axes géométriques respectifs des traverses par rapport à un élément d'appui (13).

4. Elément de fixation selon les revendications 1 à 3, **caractérisé en ce que** les jeux axiaux (X1, X2, Y1, Y2) sont prévus le long des axes géométriques des axes (5, 9), tourillons (7) et traverses (23, 24), que leurs amplitudes peuvent être choisies à volonté indépendamment les unes des autres et que les valeurs diminuent facultativement depuis zéro, la valeur maximale respective étant la somme des jeux axiaux (X1, X2, Y1, Y2) le long d'un axe géométrique (X1+X2 et Y1+Y2).

5. Elément de fixation selon les revendications 1 à 4, **caractérisé en ce que** l'élément récepteur (2) du raccord à croisillon est raccordé de manière à pouvoir tourner dans tous les sens autour des deux axes géométriques des tourillons (7) ou axes (5, 9) ou traverses (23, 24) au choix individuellement ou en combinaison par un élément d'appui (13).

6. Elément de fixation selon les revendications 1 et 3 à 5, **caractérisé en ce que** l'élément récepteur (2) du raccord par joint à croisillon est raccordé par une pièce de joint à croisillon à tourillon (6.1) à un élément d'appui (13) de manière à pouvoir bouger dans tous les sens du plan de coupe ou des plans de coupe parallèles des deux axes géométriques des tourillons (7) au choix individuellement ou en combinaison, le joint à croisillon à tourillon (6.1) s'appuyant par le tourillon (7) dans des alésages de coulissement (3, 11) dans les mâchoires à fourches (4) de l'élément récepteur (2) et de l'élément d'appui (13) et un jeu axial (Y1, Y2) étant prévu entre chaque mâchoire à fourche (4) de l'élément récepteur (2) et la pièce de joint à croisillon (6.1) ainsi qu'un jeu axial (X1, X2) entre chaque mâchoire à fourche (4) de l'élément d'appui (13) et la pièce de joint à croisillon (6.1).

7. Elément de fixation selon les revendications 1 et 3 à 6, **caractérisé en ce que** l'élément récepteur (2) du raccord par joint à croisillon est raccordé par une pièce de joint à croisillon à axe (6.2) à un élément d'appui (13) de manière à pouvoir bouger dans tous les sens des plans de coupe parallèles des deux axes géométriques des alésages de coulissement (8, 10) au choix individuellement ou en combinaison, les axes (5, 9) étant insérés fixement dans les alésages (14, 15) des mâchoires à fourches de l'élément récepteur (2) et de l'élément d'appui (13) et, pour permettre cet appui mobile, un jeu axial (Y1, Y2) étant prévu entre chaque mâchoire à fourche (4) de l'élément récepteur (2) et la pièce de joint à croisillon à axe (6.2) ainsi qu'un jeu axial (X1, X2) entre chaque mâchoire à fourche (4) de l'élément d'appui (13) et la pièce de joint à croisillon à axe (6.2).

8. Elément de fixation selon les revendications 1 et 3 à 7, **caractérisé en ce que** l'élément récepteur (2) du raccord par joint à croisillon est raccordé par une pièce de joint à croisillon à tourillon-axe (6.3) à un élément d'appui (13) de manière à pouvoir bouger dans tous les sens des plans de coupe parallèles des deux axes géométriques des tourillons (7) et de l'axe (5 ou 9) au choix individuellement ou en combinaison, la pièce de joint à croisillon à tourillon-axe (6.3) étant disposée de manière à pouvoir coulisser par l'alésage de coulissement (8 ou 10) sur l'axe (5 ou 9) assis fixement dans les alésages (14 ou 15) des mâchoires à fourches (4) de l'élément récepteur (2) ou de l'élément d'appui (13) et les tourillons (7) s'appuyant de manière à pouvoir bouger dans des alésages de coulissement (3 ou 11) dans les mâchoires à fourche (4) de l'élément récepteur (2) ou de l'élément d'appui (13) et un jeu axial (Y1, Y2) étant prévu entre chaque mâchoire à fourche (4) de l'élément récepteur (2) et la pièce de joint à croisillon à tourillon-axe (6.3) ainsi qu'un jeu axial (X1, X2) entre chaque mâchoire à fourche (4) de l'élément d'appui (13) et la pièce de joint à croisillon à tourillon-axe (6.3).

9. Elément de fixation selon les revendications 2 à 5, **caractérisé en ce que** le raccord par joint à croisillon à oeillet-trou oblong (23, 24) est réalisé au choix sous forme d'un raccord par joint à croisillon à oeillet-trou oblong à mâchoires fixes, d'un raccord par joint à croisillon à oeillet-trou oblong à mâchoires fixes et à chemise en élastomère d'une traverse, raccord par joint à croisillon à oeillet-trou oblong à mâchoires rotatives avec traverse, d'un raccord par joint à croisillon à oeillet-trou oblong à mâchoires fixes, glissière et manchon et d'un raccord par joint à croisillon à oeillet-trou oblong à mâchoires fixes, glissière et éléments à ressort.

10. Elément de fixation selon les revendications 2 à 5 et 9, **caractérisé en ce que** le raccord par joint à croisillon à oeillet-trou oblong à mâchoires fixes (4, 12) est réalisé avec un intervalle similaire à un trou oblong (25) orienté parallèlement à la traverse (24) associée à l'élément récepteur entre l'élément récepteur (2) et la traverse (24) associée à l'élément récepteur et que cet intervalle est traversé par une traverse (23) de type oeillet associée à l'élément d'appui, l'intervalle (26) entre la traverse (23) associée à l'élément d'appui et l'élément d'appui (13) étant réalisé suffisamment large pour permettre les mouvements tournants et linéaires de l'élément récepteur (2) par rapport à l'élément d'appui (13), cet intervalle (25) étant dimensionné de manière à ce que la traverse (23) associée à l'élément d'appui s'appuie de manière à pouvoir coulisser en correspondance géométrique et en direction des axes des traverses (23, 24).

11. Elément de fixation selon les revendications 2 à 5 et 9 à 10, **caractérisé en ce que** le raccord par joint à croisillon à oeillet-trou oblong à mâchoires fixes et à chemise en élastomère est réalisé avec un intervalle similaire à un trou oblong (25) orienté parallèlement à la traverse (24) associée à l'élément récepteur entre l'élément récepteur (2) et la traverse (24) associée à l'élément récepteur entre l'élément récepteur (2) et la traverse (24) associée à l'élément récepteur et que cet intervalle est traversé par une traverse (23) de type oeillet associée à l'élément d'appui avec l'élément d'appui (13), l'intervalle (26) entre la traverse (23) associée à l'élément d'appui et l'élément d'appui (13) étant réalisé suffisamment large pour permettre les mouvements tournants et linéaires de l'élément récepteur (2) par rapport à l'élément d'appui (13), cet intervalle (25) étant dimensionné de manière à ce que la traverse (23) enveloppée d'un élastomère de forme tubulaire associée à l'élément d'appui s'appuie de manière à pouvoir coulisser en correspondance géométrique et en direction des axes des traverses (23, 24).

12. Elément de fixation selon les revendications 2 à 5 et 9 à 12, **caractérisé en ce que** le raccord par joint à croisillon à oeillet-trou oblong à mâchoires fixes, glissière et éléments à ressort est réalisé avec un intervalle similaire à un trou oblong (25) orienté parallèlement à la traverse (24) associée à l'élément récepteur entre l'élément récepteur (2) et la traverse (24) associée à l'élément récepteur du fait qu'une glissière (28) avec un manchon (29) s'appuyant de manière articulée sur un axe parallèle à traverse (24) est disposée de manière à pouvoir coulisser en correspondance géométrique et que le manchon du manchon avec l'axe (29) est traversé par une traverse (23) de type oeillet associée à l'élément d'appui avec l'élément d'appui (13), l'intervalle (26) entre la traverse (23) associée à l'élément d'appui et l'élément d'appui (13) étant dimensionné suffisamment large pour permettre les mouvements tournants et linéaires de l'élément récepteur (2) par rapport à l'élément d'appui (13), que la traverse (23) associée à l'élément s'appuie de manière à pouvoir coulisser en correspondance géométrique et en direction de l'axe de la traverse (23) associée à l'élément d'appui dans le manchon en appui articulé.

13. Elément de fixation selon les revendications 2 à 5 et 9 à 11, **caractérisé en ce que** le raccord par joint à croisillon à oeillet-trou oblong à mâchoires fixes, glissière et éléments à ressort est réalisé avec un intervalle similaire à un trou oblong (25) orienté parallèlement à la traverse (24) associée à l'élément récepteur entre l'élément récepteur (2) et la traverse (24) associée à l'élément récepteur du fait qu'une glissière (28) avec des éléments à ressort (30) disposés perpendiculairement à la traverse (24) associée à l'élément récepteur est disposée de manière à pouvoir coulisser en correspondance géométrique en direction de l'élément récepteur (2) et que cet intervalle est traversé par une traverse (23) de type oeillet associée à l'élément d'appui avec l'élément d'appui (13) entre les éléments à ressort (30), l'intervalle (26) entre la traverse (23) associée à l'élément d'appui et l'élément d'appui (13) étant dimensionné suffisamment large pour permettre les mouvements tournants et linéaires de l'élément récepteur (2) par rapport à l'élément d'appui (13), que la traverse (23) associée à l'élément d'appui s'appuie de manière à pouvoir coulisser élastiquement et en direction de l'axe de la traverse (23) associée à l'élément d'appui.

14. Elément de fixation selon les revendications 2 à 5 et 9 à 13, **caractérisé en ce que** le raccord par joint à croisillon à oeillet-trou oblong à mâchoires rotatives avec traverse est réalisé avec un intervalle similaire à un trou oblong (25) orienté parallèlement à la traverse (24) associée à l'élément récepteur entre l'élément récepteur (2) et la traverse (24) associée à l'élément récepteur et des mâchoires (4) pouvant tourner autour d'un axe parallèle à la traverse (24) au niveau de l'élément récepteur (2) et qui sont raccordées fixement à la traverse (24) associée à l'élément récepteur et que cet intervalle est traversé par une traverse (23) de type oeillet associée à l'élément d'appui avec l'élément d'appui (13), l'intervalle (26) entre la traverse (23) associée à l'élément d'appui et l'élément d'appui (13) étant réalisé suffisamment large pour permettre les mouvements tournants et linéaires de l'élément récepteur (2) par rapport à l'élément d'appui (13), l'intervalle (25) étant dimensionné de manière à ce que la traverse (23) associée à l'élément d'appui s'appuie de manière à pouvoir coulisser en correspondance géométrique et en direction des axes des traverses (23, 24).

15. Elément de fixation selon les revendications 1 à 14, **caractérisé en ce que** le raccordement de l'élément récepteur (2) avec plaque (1) et de l'élément d'appui (13) avec goujon (17) à l'élément récepteur (2) avec goujon (17) et l'élément d'appui (13) avec plaque (1) est de type interchangeable.

16. Elément de fixation selon les revendications 1 à 15, **caractérisé en ce que** l'élément d'appui (13) est raccordé à un goujon de fixation (17) et que celui-ci s'appuie facultativement en rotation dans un support axial (18) qui est pourvu d'un palier axial (19).

17. Elément de fixation selon les revendications 1 à 16, **caractérisé en ce que** le support axial (18) est raccordé à la structure porteuse.

18. Elément de fixation selon les revendications 1 à 17, **caractérisé en ce que** toutes les composantes sont pourvues facultativement entre l'élément récepteur (2) et le support axial (18), y compris entre l'élément récepteur (2) et le support axial (18) eux-mêmes, d'un capuchon protecteur (20) qui est raccordé en correspondance géométrique ou en correspondance mécanique par un raccord profilé (21).

19. Elément de fixation selon les revendications 1 à 18, **caractérisé en ce que** les deux axes géométriques des tourillons (7) ou axes (5, 9) ou traverses (23, 24) sont facultativement d'un modèle pouvant être bloqué individuellement pour éviter les rotations à l'aide de moyens connus.

20. Elément de fixation selon les revendications 1 à 19, **caractérisé en ce que** les 3 degrés de liberté rotatifs et les 2 linéaires possibles sont réalisables au choix individuellement ou en combinaison.
